# EUROPEAN PATENT SPECIFICATION

(11) **EP 3 167 781 B1**
(45) Date of publication and mention of the grant of the patent: **02.01.2019**
(21) Application number: 16198209.5
(22) Date of filing: 10.11.2016
(51) Int. Cl.: A47J 37/12

(54) **COOKING APPARATUS FOR FOOD AND CONNECTED BASKET**
KOCHVORRICHTUNG FÜR LEBENSMITTEL UND DAMIT VERBUNDENER KORB
APPAREIL DE CUISSON POUR ALIMENTS ET PANIER RELIÉ

(30) Priority: 12.11.2015 IT UB20155546
(43) Date of publication of application: 17.05.2017
(73) Proprietor: De' Longhi Appliances S.r.l. Con Unico Socio, 31100 Treviso (IT)
(72) Inventor: De' Longhi, Giuseppe, 31100 Treviso (TV) (IT); Favaretto, Alessandro, 30031 Dolo (VE) (IT)
(74) Representative: Petraz, Gilberto Luigi

(56) References cited:
- EP-B1- 1 152 681
- GB-A- 2 345 631

## Description

### FIELD OF THE INVENTION

The present invention concerns a cooking apparatus, used by way of example, but not only, for cooking food by immersing it in a cooking liquid, and also the connected container or basket.

In particular, embodiments described here concern said apparatus and a connected container or basket equipped with a handle to manage it easily and safely outside and inside the cooking apparatus.

### BACKGROUND OF THE INVENTION

It is known that there are cooking apparatuses on the market that allow to cook food, using immersion or other.

Usually this type of cooking apparatus comprises a hollow containing body, defining a compartment, used to insert inside it the food to be heated and/or cooked. Moreover, such cooking apparatuses can comprise a lid, or not.

With regard to immersion-type cooking apparatuses, deep fryers are known for example, which comprise a receptacle that can be filled with a suitable cooking liquid to be used for cooking the food.

It is also known that this type of apparatus for cooking food, which can be for example the compact and transportable type, provides heating elements, for example the electric type, to take the cooking liquid to the desired temperature.

To cook the food inside the compartment, known cooking apparatuses comprise a basket, of a suitable shape, to contain the food and immerse it in the cooking liquid, lowering it inside the receptacle.

When cooking is terminated, it is possible to drive the basket, in the inverse direction to the previous one, so as to remove the food from the cooking apparatus, to drain the remaining cooking liquid and serve the food.

Baskets of known cooking apparatuses usually have a handle, a grip or a rod, so that an operator can remove the basket from the containing body.

Patent US-4,487,117-B is known in the state of the art, in which the basket is guided by a parallelogram mechanism, but this solution has a big lateral bulk which affects the volume of the receptacle and consequently the volume of oil used for cooking.

Moreover, in this solution the folding handle is recessed inside the band of the containing body, but this solution has the disadvantage that the handle can be hit by the steam emerging from the front part of the lid, if this is not hermetically closed, and can therefore get hot.

Furthermore, this solution has many movement elements connected to the basket, causing a considerable bulk and delimiting areas that are difficult to clean, and also a poor fluidity in movement.

Another solution, present in the patent application GB-2.345.631-A, proposes to compact the bulk needed to lift the basket. However, this solution has great critical issues in the fluid flow and in handling the basket and the handle, since the forces contrast the motion imparted on each occasion.

EP 1152681 B1 is also known, which describes a device for lifting and lowering a basket of a deep fryer, equipped with a folding handle hinged with respect to a support in which the deep fryer is disposed.

A typical disadvantage of state-of-the-art cooking apparatuses is seen in the difficulties found by the operator, first in inserting the basket inside the cooking apparatus and then in removing the basket from the cooking apparatus.

Another problem is due to the fact that the operator can burn or scald himself/herself directly with the cooking apparatus when inserting the basket inside the cooking apparatus, and also when handling it, since the distance between the grip and the receptacle is very small.

Another problem is that the handle is not located completely outside the structure of the cooking apparatus, so as not to be hit by air and exposing itself to liquids at high temperature, especially during the cooking of the food.

Another problem is due to the fact that the operator can burn or scald himself/herself both because of splashes of cooking liquid and also because the handling means are not ergonomic and/or not far enough from the basket itself in the various operating conditions in which the two components can find themselves, in particular, when at the end of cooking, the basket is shaken to free the excess oil from the fried food.

Another disadvantage is that the basket can get jammed, along the lateral walls of the receptacle of the cooking apparatus because the handling means have not facilitated and accompanied its insertion.

Another problem is due to the instability of the basket which, during movement and because of unsuitable handling means, does not allow the operator to completely control the basket.

There is therefore a need to perfect a handle for an apparatus for cooking food, and an apparatus for cooking food comprising said handle, which can overcome at least one of the disadvantages of the state of the art.

In particular, one purpose of the present invention is to obtain a handle for an apparatus for cooking food and the connected basket, and also the apparatus for which the basket is intended, all suitable for a safe and easy use.

Another purpose of the present invention is to obtain a handle and the connected basket for an apparatus for cooking food which allow a fluid movement and a constant control of the position of the basket through the handle.

An additional purpose is to obtain a handle that works in relation to the basket and in relation to the apparatus for cooking food in a position that is far enough away from them and which allows to manage the basket stably and safely, so that the operator never runs any risk of burning himself/herself.

Another purpose is to obtain a handle for the basket of an apparatus for cooking food that allows to locate and position the basket in the apparatus stably and safely, possibly preventing occupying unnecessary spaces during cooking.

Furthermore, another purpose is to obtain a handle for an apparatus for cooking food that is balanced when it cooperates with the basket, preventing dangerous undulation and/or oscillation movements of the basket, in every operating step both in relation to the cooking apparatus and outside it.

Another purpose of the present invention is to obtain a handle for an apparatus for cooking food that gives the operator a greater and better guarantee of control in every operating step of the basket.

Another purpose of the present invention is to obtain a handle for an apparatus for cooking food that allows to transport the basket and the food contained therein with ease, also allowing to pour it practically and safely into a receptacle suitable to contain it, and from which it can be eaten, and also to shake the basket to free the excess oil without the user's hand being hit by splashes.

Another purpose of the present invention is to obtain a handle for an apparatus for cooking food, the corresponding basket, and the cooking apparatus that comprises them, which can easily be cleaned and washed.

Another purpose is to obtain a basket and the corresponding handle in which the handle is always in a position such as to keep the user's hand far from the content which, if very hot, can cause splashes arriving from the bath of boiling liquid.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, and as set forth in the respective independent claims, a basket and a connected apparatus for cooking food are provided, the basket being associated with a handle having several positions and the apparatus being intended to cooperate with the handle.

The apparatus for cooking food comprises a receptacle, to contain the cooking liquid, in which the basket can be inserted and from which, vice versa, the basket can be removed, using the handle.

According to one aspect of the present invention, the handle comprises a support body with which a grip and a guide are associated.

According to another aspect of the present invention, the handle collaborates fluidly with the basket in at least two different positions, while it collaborates with the apparatus when the basket is positioned and immersed in the cooking liquid, and also during the removal and immersion steps.

The handle has a stable seating, which cooperates with a specialized edge portion of the apparatus, to insert and position the basket in the apparatus safely and definitively.

The apparatus can advantageously have a lid, in the reciprocal edges of which, also cooperating with the specialized edge portion, the seating for the handle is present.

The basket is connected to the handle by a pantograph system lying on the median lying plane of the basket and the handle, stabilized laterally, which allows a continuous and reciprocal control by the operator, without affecting the lateral bulk.

According to variant embodiments of the invention, the handle comprises clamping means to guarantee the desired operating position of the basket with respect to the handle, at least when it is being handled.

According to one aspect of the invention, by operating on the handle it is positioned with respect to the basket and/or with respect to the apparatus in a work or inactive position, modifying the reciprocal relationship between handle and basket, at the same time guaranteeing safety to the operator and the certainty that he/she will not be hit by splashes of boiling cooking liquid.

This confers on the basket a balanced and controlled movement, in a sensitive and precise way.

According to variant embodiments of the present invention, the support body can be associated with the containing body of the cooking apparatus so as to confer on the basket a secure and stable positioning inside the compartment where there is the cooking liquid, throughout the cooking step; in this position, with the basket positioned, at the same time the handle has an operating position and a fixed and inactive position in which it occupies very little space.

With this embodiment an optimum balance and positioning is obtained of the basket inside the apparatus for cooking food, at the same time without occupying useless space and preventing the risk of causing damage during the movement step thereof.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a section of a cooking apparatus with a handle and basket according to embodiments described here in a first operating condition;
- fig. 2 is a section of a cooking apparatus with a handle and basket according to embodiments described here in a second operating condition;
- fig. 3 is a section of a handle and corresponding basket according to embodiments described here in a first operating condition;
- fig. 4 is an enlarged section of a handle and corresponding basket according to embodiments described here in a second operating condition;

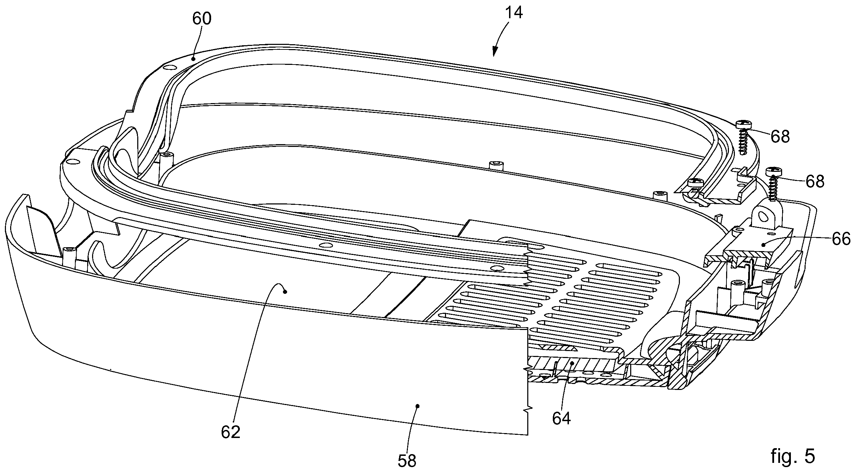

- fig. 5 is a partly sectioned and exploded perspective view of a lid for a cooking apparatus according to embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

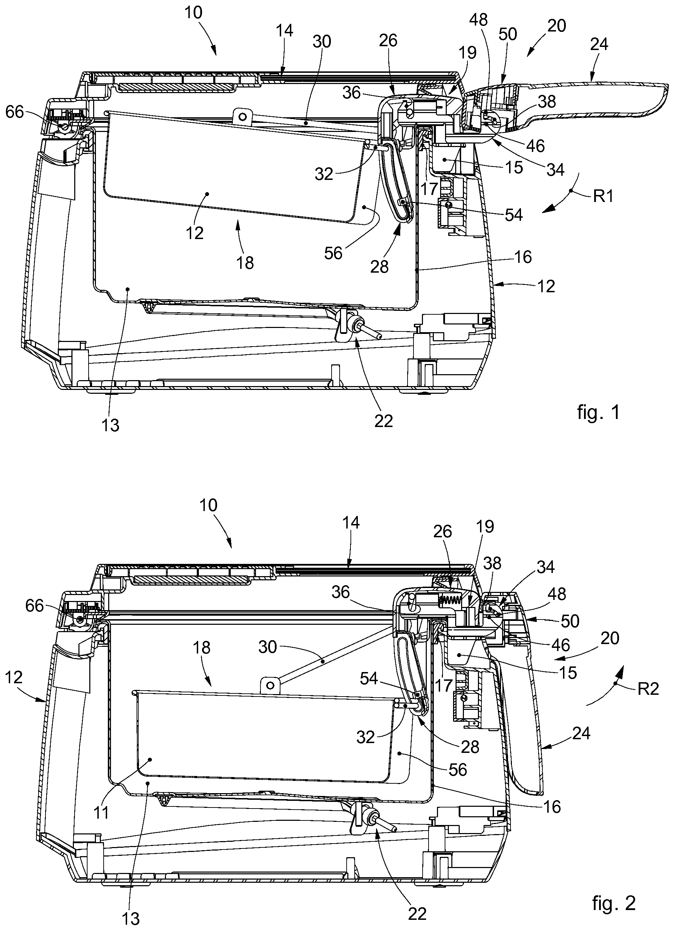

Figs. 1 and 2 are used to describe example embodiments of a cooking apparatus 10, used for cooking food advantageously by immersing it in a cooking liquid.

The cooking apparatus 10 comprises at least a containing body 12 which defines the structure thereof, a possible lid 14, and at least a receptacle 16 suitable to contain a desired quantity of cooking liquid in a compartment 13, and a basket 18.

Furthermore, the cooking apparatus 10 can comprise a heating unit 22 configured to heat and/or cook the food, the heating unit 22 is shown by way of example under the receptacle 16.

According to the present invention, a handle 20 collaborates with the basket 18 to position and move it in a controlled manner inside and outside the receptacle 16.

The containing body 12 comprises a seating 15 that serves to apply the handle 20, said seating 15 defining a support and anchoring edge 17.

The support and anchoring edge 17 cooperates with a groove 21 present in the handle 20 when the basket 18 is in a stable cooking position inside the compartment 13. Moreover, the support and anchoring edge 17, together with the lid 14, defines a housing seating 19 for the handle 20.

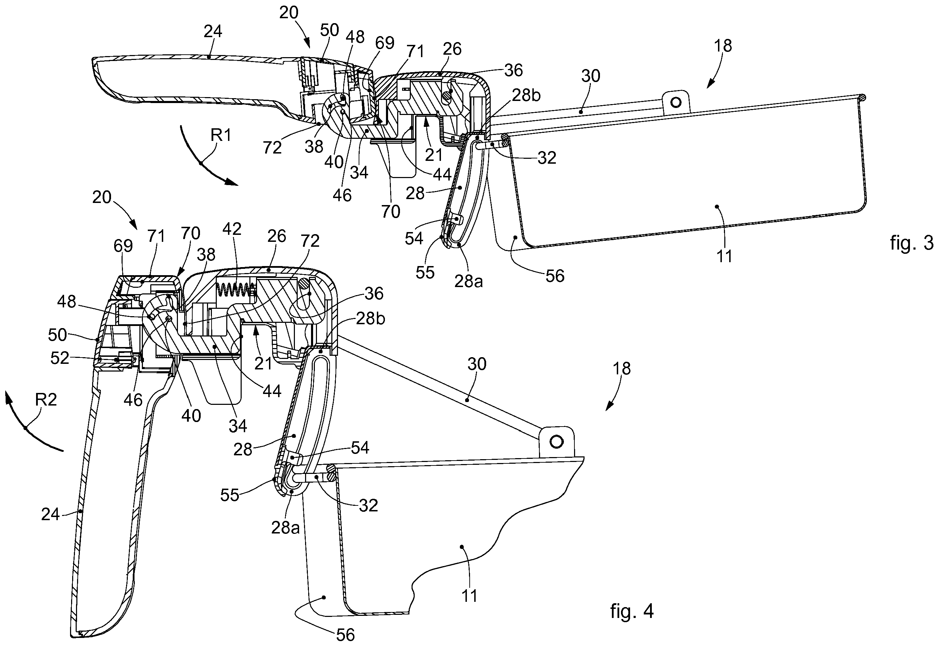

Figs. 3 and 4 are used to describe example embodiments of the handle 20 which comprises a grip 24, a support body 26 and a guide 28, and also pantograph means, such as levers, cooperating stably and continuously with the basket 18.

The grip 24 is connected rotatably with the support body 26 and is configured to selectively define the reciprocal position of the handle 20 with respect to the basket 18.

The basket 18 comprises a body 11, advantageously reticulated, in the upper lateral edges of which, that is, on both sides and in a median position, there is an anchoring seating that allows the controlled rotation of the terminal part of at least one rod 30, which is part of said pantograph: said body 11, on the upper edge and on the rear side, also has a connection element 32 that allows the constrained sliding of the other element that makes up the pantograph, that is, the guide 28.

According to variant embodiments, two rods 30 can be provided, rotatable with respect to the body 11 and associated with the support body 26 of the handle 20 where they join and are stabilized.

Advantageously, the bulk of the at least one rod 30 comes within the projection of the perimeter of the basket 18, so as to contain the lateral bulk, not exceeding those of the basket 18.

The basket 18 can comprise a recess 56, inside which the guide 28 can move.

The recess 56 is configured to allow the guide 28 to slide without interference, so as to allow to contain the sizes of the receptacle 16.

The grip 24 and the support body 26 are reciprocally positionable in a controlled manner.

The grip 24 has an open support plane 71, a closed support plane 72 and a knee-shaped edge, or knee 70; the knee 70 cooperates with a sliding plane 69 to determine the two positions of the handle 20 with respect to the support body 26, there being a reciprocal connection by means of a sliding member 34, elastically countered by a spring 42.

The support body 26 comprises a seating 44 inside which the sliding member 34 can move.

The sliding member 34 slides on linear guides present in the support body 26 and, again in cooperation with the support body 26, has an end slot 36 that cooperates with the terminal part of the at least one rod 30 that connects thereto.

The sliding member 34, in cooperation with the grip 24, has a rotation hole 40 that cooperates with a pin 46 associated with the grip 24.

In cooperation with the hole 40, the sliding member 34 has a slot 38 partly generated by the axis of the hole 40 and partly extending toward the outside in practice orthogonal to the circumferential part.

The slot 38 cooperates with a pin-type abutment element 48 associated with the grip 24, the abutment element 48 is positioned, in relation to the slot 38, as in fig. 3 when the handle 20 is in the open position and as in fig. 4 when the handle 20 is in the closed position.

By acting on the grip 24 and playing on the action of the knee 70, the sliding member 34 is driven and therefore the corresponding position is determined of the grip 24 with respect to the support body 26.

Then, one acts on the terminal part of the at least one rod 30 and conditions the layout arrangement of said at least one rod 30 with respect to the support body 26 and with respect to the body 11; in the position shown in fig. 4, that is, with the basket 18 in the cooking position, the connection element 32 is at the first end 28a of the guide 28 and is positioned there, passing through a protrusion 54.

The connection element 32, which is omega-shaped, is inserted into the slot of the guide 28, and passes through it. This configuration allows to reduce the friction between the guide 28 and the connection element 32.

The protrusion 54 is configured to associate with a protection 55, for example of the plastic type, applied to the guide 28, which serves to protect the covering of the receptacle 16.

In the position shown in fig. 3, where the basket 18 is in the handling position, the connection element 32 is at the second end 28b of the guide 28.

The grip 24 can comprise a button 50, countered by an elastic element 52, configured to allow to drive the grip 24 from the extended handle 20 position. In this condition, by driving the button 50, the abutment 48 is thrust, obliging it to descend to move to the curved portion of the slot 38. In this position of the abutment element 48, it is possible to take the grip 24 to the condition shown in fig. 4, rotating it in the direction of the arrow R1.

By means of the progressive rotation of the grip 24, depending on the sizes of the knee 70 and the weight of the basket 18, the latter will begin to descend inside the receptacle 16 collaborating in its descent with the guide 28.

During the descent of the basket 18, the connection element 32 follows the shape of the guide 28.

According to variant embodiments, the guide 28 can have the profile of an arch of a circle, elliptical or other desired shape, to make the basket 18 descend into the receptacle 16 in a desired manner.

The guide 28 supports the connection element 32, conferring a stable and safe position on the basket 18.

The protrusion 54 can also serve to keep the grip 24 in the operating condition shown in fig. 4 with a desired mechanical resistance, so that a certain force has to be applied to vary the position of the grip 24 again. This gives the handle 20 and the basket 18 further stability in this position.

To lift the basket 18 along the receptacle 16, and take it to the condition shown in fig. 3, it is possible to make the grip 24 rotate according to the direction of the arrow R2.

Overcoming the weight force of the basket 18, the latter will start to rise inside the receptacle 16, collaborating in its ascent with the guide 28.

The grip 24 can be rotated until the abutment element 48 can follow the profile of the slot 38.

When the handle 20 is in the extended condition, the elastic element 52 constrains the abutment element 48 to the drive of the button 50.

This condition can be maintained until the button 50 is pressed again, allowing the grip 24 to be rotated, guaranteeing a stable positioning of the handle 20 and the basket 18 on the support and anchoring edge 17 of the containing body 12.

In this position, the basket 18 can be maintained to drain excess cooking liquid.

According to one aspect of the present invention, the movement of the handle 20 and the corresponding basket 18 does not interfere with the lid 14, whatever relative position they are with respect to the latter.

The lid 14 can comprise a casing 58 and a covering element 60 which define its structure.

The casing 58 can comprise a window 62 to inspect inside the cooking apparatus 10 even when the lid 14 is closed.

According to variant embodiments, the window 62 can be non-removably integrated in the casing 58.

By way of example, the casing 58 can be made of plastic materials and the window 62 of glass.

The window 62 can be enclosed in the casing 58 to facilitate cleaning. The lid 14 can come into contact with the cooking liquid and in this embodiment it is simpler and more practical to clean the lid 14.

Moreover, the casing 58 can comprise a filter 64 configured to allow the steam that can be generated in the receptacle 16 to emerge from the cooking apparatus 10 even when the lid 14 is closed.

A hinge 66 is associated with the lid 14 to open and close it.

The hinge 66 and the lid 14 can be made as two separate bodies, coupled by attachment elements 68.

It is clear that modifications and/or additions of parts may be made to the handle 20 and the cooking apparatus 10 which comprises it as described heretofore, without departing from the field and scope of the present invention.

It is also clear that, although the present invention has been described with reference to some specific examples, a person of skill in the art shall certainly be able to achieve many other equivalent forms of handle 20 and the cooking apparatus 10 which comprises it, having the characteristics as set forth in the claims and hence all coming within the field of protection defined thereby.

## Claims

1. Cooking apparatus for food comprising a containing body (12) including a compartment (13) and a lid (14), said compartment (13) cooperating with a heating unit (22) and with a basket (18) having a body (11) and equipped with a handle (20) having a support body (26), wherein the body (11) is associated with the handle (20) by means of levers, said handle (20) having said support body (26) and a grip (24), said grip (24) having two operating positions with respect to said support body (26), wherein said levers comprises at least one rod (30) hinged with a constraint of pure rotation around the center line of the upper longitudinal part of the body (11) and a guide (28) associated mobile longitudinally with the rear edge of the body (11), said at least one rod (30) being connected to the support body (26) and said guide (28) being solid with said support body (26), **characterized in that** said guide (28) has an arched profile and cooperates with a connection element (32) attached to said body (11).

2. Cooking apparatus (10) as in claim 1, **characterized in that** the lateral bulk of the rod (30) comes within the projection of the perimeter of the basket (18).

3. Cooking apparatus (10) as in any claim hereinbefore, **characterized in that** the support body (26) has a sliding plane (69) cooperating with a knee (70) in the grip (24) to define an open support plane (71) and a closed support plane (72), the grip (24) being associated with the support body (26) by a sliding member (34) elastically countered by a spring (42).

4. Cooking apparatus (10) as in claim 3, **characterized in that** the sliding member (34) has an end slot (36) cooperating with the at least one rod (30).

5. Cooking apparatus (10) as in claim 3 or 4, **characterized in that** the sliding member (34) slides in a seating (44) present in the support body (26).

6. Cooking apparatus (10) as in any of the claims from 3 to 5, **characterized in that** the sliding member (34) is associated rotatingly with a pin (46) present in the grip (24) and cooperates through a slot (38) with an abutment element (48) associated with the grip (24) itself.

7. Cooking apparatus (10) as in claim 6, **characterized in that** the slot (38) determines two positions of the abutment element (48) conditioned by a button (50).

8. Cooking apparatus (10) as in any claim hereinbefore, **characterized in that** the body (11) has a recess (56) in relation to the guide (28).

9. Cooking apparatus (10) as in any claim hereinbefore, **characterized in that** the guide (28) has a protrusion (54).

10. Cooking apparatus (10) as in any claim hereinbefore, **characterized in that** the guide (28) has a protection (55).

11. Basket for an apparatus for cooking food, the basket having a body (11) and a handle (20) with a support body (26), wherein the body (11) is associated by means of levers with the handle (20), said handle (20) also having a grip (24), said grip (24) having two operating positions with respect to said support body (26), wherein said levers comprise at least one rod (30) hinged with a constraint of pure rotation around the center line of the upper longitudinal part of the body (11) and a guide (28) associated mobile longitudinally with the rear edge of the body (11), said at least one rod (30) being connected to the support body (26) and said guide (28) being solid with said support body (26), **characterized in that** said guide (28) has an arched profile and cooperates with a connection element (32) attached to said body (11).

## Patentansprüche

1. *Kochvorrichtung für Nahrungsmittel, umfassend einen Behälter (12), welcher eine Kammer (13) und einen Deckel (14) umfasst, wobei die Kammer (13) mit einer Heizeinheit (22) und mit einem Korb (18) zusammenwirkt, der einen Körper (11) aufweist und mit einem Haltegriff (20) versehen ist, der einen Tragkörper (26) aufweist, wobei der Körper (11) mit dem Haltegriff (20) mithilfe von Hebeln verbunden ist, wobei der Haltegriff (20) den Tragkörper (26) und einen Handgriff (24) aufweist, wobei der Handgriff (24) zwei Betriebspositionen in Bezug auf den Tragkörper (26) aufweist, wobei die Hebel mindestens eine Stange (30), die unter Beschränkung einer reinen Rotation um die Mittelachse des oberen Längsteils des Körpers (11) angelenkt ist, und eine Führung (28), die beweglich in Längsrichtung mit der hinteren Kante des Körpers (11) verbunden ist, umfassen, wobei die mindestens eine Stange (30) mit dem Tragkörper (26) verbunden ist und die Führung (28) fest mit dem Tragkörper (26) verbunden ist, **dadurch gekennzeichnet, dass** die Führung (28) ein gekrümmtes Profil aufweist und mit einem an dem Körper (11) befestigten Verbindungselement (32) zusammenwirkt.*

2. *Kochvorrichtung (10) gemäß Anspruch 1, **dadurch gekennzeichnet, dass** der laterale Hauptteil der Stange (30) innerhalb der Projektion des Umfangs des Korbes (18) liegt.*

3. *Kochvorrichtung (10) gemäß irgendeinem der vorhergehenden Ansprüche, **dadurch gekennzeichnet, dass** der Tragkörper (26) eine Gleitebene (69) aufweist, die mit einem Kniestück (70) in dem Handgriff (24) zusammenwirkt,* so *dass eine offene Tragebene (71) und eine geschlossene Tragebene (72) definiert werden, wobei der Handgriff (24) mit dem Tragkörper (26) durch ein Gleitelement (34) verbunden ist, das elastisch durch eine Feder (42) gekontert wird.*

4. *Kochvorrichtung (10) gemäß Anspruch 3, **dadurch gekennzeichnet, dass** das Gleitelement (34) eine Endnut (36) aufweist, die mit der mindestens einen Stange (30) zusammenwirkt.*

5. *Kochvorrichtung (10) gemäß Anspruch 3 oder 4, **dadurch gekennzeichnet, dass** das Gleitelement (34) in einer Aufnahme (44) gleitet, die in dem Tragkörper (26) vorliegt.*

6. *Kochvorrichtung (10) gemäß irgendeinem der Ansprüche 3 bis 5*, ***dadurch gekennzeichnet, dass** das Gleitelement (34) rotierend mit einem Bolzen (46) verbunden ist, der in dem Handgriff (24) vorliegt, und durch eine Nut (38) mit einem Anschlagelement (48) zusammenwirkt, das selbst mit dem Handgriff (24) verbunden ist.*

7. *Kochvorrichtung (10) gemäß Anspruch 6, **dadurch gekennzeichnet, dass** die Nut (38) zwei Positionen des Anschlagelements (48), welche durch einen Knopf (50) festgelegt werden, bestimmt.*

8. *Kochvorrichtung (10) gemäß irgendeinem der vorhergehenden Ansprüche, **dadurch gekennzeichnet, dass** der Körper (11) eine Aussparung (56) in Bezug auf die Führung (28) aufweist.*

9. *Kochvorrichtung (10) gemäß irgendeinem der vorhergehenden Ansprüche, **dadurch gekennzeichnet, dass** die Führung (28) einen Vorsprung (54) aufweist.*

10. *Kochvorrichtung (10) gemäß irgendeinem der vorhergehenden Ansprüche, **dadurch gekennzeichnet, dass** die Führung (28) eine Schutzvorrichtung (55) aufweist.*

11. *Korb für eine Vorrichtung zum Kochen von Nahrungsmitteln, wobei der Korb einen Körper (11) und einen Haltegriff (20) mit einem Tragkörper (26) aufweist, wobei der Körper (11) mit dem Haltegriff (20) mithilfe von Hebeln verbunden ist, wobei der Haltegriff (20) ebenso und einen Handgriff (24) aufweist, wobei der Handgriff (24) zwei Betriebspositionen in Bezug auf den Tragkörper (26) aufweist, wobei die Hebel mindestens eine Stange (30), die unter Beschränkung einer reinen Rotation um die Mittelachse des oberen Längsteils des Körpers (11) angelenkt ist, und eine Führung (28), die beweglich in Längsrichtung mit der hinteren Kante des Körpers (11) verbunden ist, umfassen, wobei die mindestens eine Stange (30) mit dem Tragkörper (26) verbunden ist und die Führung (28) fest mit dem Tragkörper (26) verbunden ist, **dadurch gekennzeichnet, dass** die Führung (28) ein gekrümmtes Profil aufweist und mit einem an dem Körper (11) befestigten Verbindungselement (32) zusammenwirkt.*

## Revendications

1. Appareil de cuisson pour aliments comportant un corps contenant (12) comprenant un compartiment (13) et un couvercle (14), ledit compartiment (13) coopérant avec une unité de chauffage (22) et avec un panier (18) ayant un corps (11) et équipé d'une poignée (20) ayant un corps de support (26), dans lequel le corps (11) est associé à la poignée (20) au moyen de leviers, ladite poignée (20) ayant ledit corps de support (26) et un élément de préhension (24), ledit élément de préhension (24) ayant deux positions de fonctionnement par rapport audit corps de support (26), dans lequel lesdits leviers comprennent au moins une tige (30) articulée avec une contrainte de rotation pure autour de la ligne centrale de la partie longitudinale supérieure du corps (11) et un guide (28) associé mobile longitudinalement par rapport au bord arrière du corps (11), ladite au moins une tige (30) étant reliée au corps de support (26) et ledit guide (28) étant solidaire avec ledit corps de support (26), **caractérisé en ce que** ledit guide (28) présente un profil arqué et coopère avec un élément de connexion (32) fixé audit corps (11).

2. Appareil de cuisson (10) selon la revendication 1, **caractérisé en ce que** l'encombrement latéral de la tige (30) se situe à l'intérieur de la projection du périmètre du panier (18).

3. Appareil de cuisson (10) selon l'une quelconque des revendications précédentes, **caractérisé en ce que** le corps de support (26) présente un plan de glissement (69) coopérant avec un coude (70) dans la poignée (24) pour définir un plan de support ouvert (71) et un plan de support fermé (72), le coude (24) étant associé au corps de support (26) par un élément de glissement (34) contré élastiquement par un ressort (42).

4. Appareil de cuisson (10) selon la revendication 3, **caractérisé en ce que** l'élément de glissement (34) comporte une fente d'extrémité (36) coopérant avec la au moins une tige (30).

5. Appareil de cuisson (10) selon la revendication 3 ou 4, **caractérisé en ce que** l'élément glissement (34) glisse dans une assise (44) présente dans le corps de support (26).

6. Appareil de cuisson (10) selon l'une quelconque des revendications 3 à 5, **caractérisé en ce que** l'élément de glissement (34) est associé en rotation à une broche (46) présente dans l'élément de préhension (24) et coopère à travers une fente (38) avec un élément de butée (48) associé à l'élément de préhension (24) lui-même.

7. Appareil de cuisson (10) selon la revendication 6, **caractérisé en ce que** la fente (38) détermine deux positions de l'élément de butée (48), conditionnées par un bouton (50).

8. Appareil de cuisson (10) selon l'une quelconque des revendications précédentes, **caractérisé en ce que** le corps (11) présente un évidement (56) par rapport au guide (28).

9. Appareil de cuisson (10) selon l'une quelconque des revendications précédentes, **caractérisé en ce que** le guide (28) présente une saillie (54).

10. Appareil de cuisson (10) selon l'une quelconque des revendications précédentes, **caractérisé en ce que** le guide (28) présente une protection (55).

11. Panier pour un appareil de cuisson d'aliments, le panier comportant un corps (11) et une poignée (20) avec un corps de support (26), dans lequel le corps (11) est associé au moyen de leviers à la poignée (20), ladite poignée (20) ayant également un élément de préhension (24), ledit élément de préhension (24) ayant deux positions de fonctionnement par rapport audit corps de support (26), dans lequel lesdits leviers comprennent au moins une tige (30) articulée avec une contrainte de pure une rotation autour de la ligne centrale de la partie longitudinale supérieure du corps (11) et un guide (28) associé mobile longitudinalement par rapport au bord arrière du corps (11), ladite au moins une tige (30) étant reliée au corps de support (26) et ledit guide (28) étant solidaire avec ledit corps de support (26), **caractérisé en ce que** ledit guide (28) présente un profil arqué et coopère avec un élément de connexion (32) fixé audit corps (11).
